# EUROPEAN PATENT SPECIFICATION

(11) **EP 3 660 438 B1**
(45) Date of publication and mention of the grant of the patent: **14.04.2021**
(21) Application number: 18209141.3
(22) Date of filing: 29.11.2018
(51) Int. Cl.: F28F 3/08, F28B 9/10, F28D 9/00

(54) **THE PRESENT INVENTION RELATES TO A PLATE HEAT EXCHANGER, A HEAT EXCHANGING PLATE AND A METHOD OF TREATING A FEED SUCH AS SEA WATER**
DIE VORLIEGENDE ERFINDUNG BETRIFFT EINEN PLATTENWÄRMETAUSCHER, EINE WÄRMETAUSCHERPLATTE UND EIN VERFAHREN ZUR BEHANDLUNG EINES ZUFLUSSES WIE ETWA MEERWASSER
ÉCHANGEUR DE CHALEUR À PLAQUES, PLAQUE D'ÉCHANGE DE CHALEUR ET PROCÉDÉ DE TRAITEMENT D'UN FLUX TEL QUE DE L'EAU DE MER

(43) Date of publication of application: 03.06.2020
(73) Proprietor: Alfa Laval Corporate AB, 221 00 Lund (SE)
(72) Inventor: BLOMGREN, Fredrik, SE-217 45 MALMÖ (SE)
(74) Representative: Alfa Laval Attorneys

(56) References cited:
- EP-A1- 2 728 292
- EP-A1- 3 404 350
- WO-A1-2006/104443

## Description

### Introduction

Equipment for desalination of sea water, where one or several plate packages of heat exchanging plates form the main components in the process, have been manufactured since many years. One example of such a plate heat exchanger for desalination may be found in the international application WO 2006/104443 A1 assigned to Alfa Laval Corporate AB. The heat exchanger has an evaporation section, a separation section and a condensation section located in the plate interspaces of the heat exchanging plates. The advantage of the above-mentioned heat exchanger is that it does not need any container since the whole treatment of the sea water is performed in the plate interspaces of the plate package, i.e. evaporation, separation and condensation occur in the same plate package. This allows for a compact design The plates disclosed in WO2006/104443 A1 correspond to the preamble of claim 1, the heat exchanger disclosed in that document corresponds to the preamble of claim 1.

This kind of heat exchanger operate by evaporating a feed, typically sea water, in the evaporation section, separating the feed into vaporized feed and brine droplets in the separation section and condensing the vaporized feed into a condensed feed in the condensation section. The evaporation, separation and condensation take place simultaneously in a continuous process, and the condensed feed is continuously removed from the condensation section via an outlet located in a lower region of the condensation section.

The technology described in WO 2006/104443 A1 is only using a single stage. However, the efficiency of the heat exchanger could be improved by using multiple stages. Multiple stage heat exchanger utilise energy obtained from the condensation section of a first stage for evaporating feed of an evaporation section of a subsequent stage in the same plate package. The techniques described below may be used in both single and multistage desalination plants. The heat exchanging plate package comprises a plurality of heat exchanging plates of substantially equal size which are placed successively face to face, typically along a horizontal direction. The plates form corrugations, i.e. ridges and valleys. The ridges and valleys are oppositely oriented on opposite plates and together define a cross shaped pattern to increase the heat transfer through the plate by increase in the surface area of the plates and by causing the flow in the plate interspaces to be a turbulent flow. Each heat exchanging plate defines substantially the full height and width of the heat exchanger package, and the horizontal direction constitutes the depth of the heat exchanger package. The edges of the heat exchanging plates are mutually sealed to establish parallel plate interspaces between the plates.

The heat exchanging plates define surfaces of different type and when assembled facing each other two kinds of plate interspaces, i.e. first and second plate interspaces, are provided in alternating order, i.e. a first plate interspace is located adjacent two second plate interspaces, except of course the first and the last plate interspace along the horizontal direction. The heat exchanging plates are typically made of thermally conductive corrosion resistant materials such as stainless steel, aluminium or titanium. This allows thermal contact through the plate by whereby fluid mixing is prevented.

The feed, which typically constitutes sea water, is introduced into an evaporation section where at least a part of the feed is vaporized. The vaporized part of the feed is led to a separation section which separates vaporized feed from a remaining part constituting non-vaporized feed. The separation section typically comprises rods, bars or corrugation etc. on which the non-vaporized feed gets trapped and is led out of the separation section. The vaporized feed is then led to the condensation section in which the vaporized feed to condensate using a cooling fluid on the opposite side of the heat exchanging plates. The condensed feed, typically fresh water, is led out of the heat exchanger package. The cooling fluid is typically a liquid such as naturally cool water, preferably sea water. Alternatively, other cooling medias may be used.

It has been realised that the vaporized part of the feed also typically includes a small amount of non-condensable gases. The non-condensable gases may include non-condensed vapor and/or inert gases present in the feed. The non-condensable gases enter the condensation section as a part of the vaporized feed. The vaporized feed will in a continuous process enter the condensation section, condense into a liquid, form droplets and flow out of the condensation section via an outlet situated in the lower region of the condensation section. However, the non-condensable gases, which per definition cannot condense into a liquid at the pressures and temperatures present in the condensing section, will instead accumulate in the upper region of the condensation section. No outlet exist in the upper region and the non-condensable gases will be evacuated through the same outlet in the lower region as the condensed feed. The upper region and lower region of the condensation section should in the present context be understood in relation to the normal orientation of the plate package during operation. Gravitational forces will cause vapor and gases having a low density to move towards to the upper region whereas liquids and droplets having a higher density will move downwards towards the lower region.

As the outlet of the condensation section is located in the lower region and typically at the lowermost point of the condensation section in order to efficiently extract the condensed liquid, there is a risk that the non-condensed gases remain a long time in the upper region. The cross shaped pattern of the ridges and valleys of the heat exchanging plates, intended to increase heat transfer, will form a flow resistance for the non-condensed gases. Thus, the non-condensed gases may remain in the upper region and occupy space which could have been used for condensation of the vaporized part of the feed. The accumulation of non-condensed gases in the upper region thus makes the condensation of the vaporized feed less efficient.

Thus, it is an object of the present invention to avoid the accumulation of non-condensable gases in the upper region of the condensation section.

### Summary of the invention

According to a first aspect, the present invention relates to a plate heat exchanger according to claim 1.

The vaporized feed which enters the condensation section will condensate due to the low temperature of another fluid located opposite the condensation section, at the opposite side of the plate. The fluid on the other side of the plate thereby absorbs the heat of condensation and the vaporised feed will form droplets which will flow down towards the outlet. On the other hand, the non-condensable gases will tend to remain in the upper region of the condensation section. The cross shaped pattern of the corrugation is formed by the opposing ridges and valleys which have opposite direction and thus together form a cross corrugated pattern by flipping every other plate about the vertical axis. The ridges extend to a first distance and opposing ridges abut at contact points in the contact plane. However, the cross shaped pattern of the heat exchanging plates has been found to form an obstacle for the evacuation of the non-condensable gases through the outlet in the lower region of the condensation section.

By forming a passage extending at least a part of the distance between an upper border of the condensation section and the outlet at the lower border, the non-condensable gases will be easier to evacuate as no obstacles prevent the gases from flowing out thought the outlet. The passage allows non-condensable gases in the upper region of the condensation section to flow in the unobstructed passage towards the outlet.

The passage is formed by having the ridges in the passage extend a shorter distance and they don't reach the contact plane by indentations formed in the ridges of the corrugated plates in the passage. Thereby any contact between the opposing plates is prevented at the passage and a larger, less obstructing flow channel is achieved in the passage. The contact plane is defined at the centre of the plate interspace. The opposing plates will thus form a spacing between themselves at a location which otherwise would be obstructed by the opposing ridges. The passage should be narrow compared to the condensation section in order to maintain heat transfer and turbulent flow and prevent a reduction in the structural stability of the heat exchanger. The passage will prevent that the non-condensable gases gets trapped between the upper region of the condensation section and the outlet.

According to a further embodiment of the first aspect, the plate package defines cooling section located in the second plate interspaces between the condensation sections, the cooling sections being adapted for handling a cooling fluid. The vaporized feed which enters the condensation section will condensate due to the low temperature of the cooling fluid in the cooling section located opposite the condensation section, and form droplets which will flow down towards the outlet. The cooling fluid is thereby heated. In a one stage heat exchanger, the cooling fluid may be sea water, whereas in a multi stage heat exchanger, the cooling section may be an evaporation section of another stage.

According to a further embodiment of the first aspect, the passage extends from a location adjacent the upper border, preferably opposite the inlet. Advantageously, the passage extends from the upper border as the non-condensable gases will accumulate towards the upper border due to gravity. The distance between the inlet and the passage is preferably maximized thereby reducing the risk of letting condensable vaporized feed flow out via the passage without liquifying.

According to a further embodiment of the first aspect, the passage extends at least 50% of the distance between the upper border and the outlet, the passage preferably extending 75% to 100% of the distance between the upper border and the outlet. Advantageously, the passage extends at least substantially to the outlet since fewer or no obstacles for the non-condensable gases between the upper region and the outlet will simplify the evacuation of the non-condensable gases. The passage should extend at least a greater part of the distance between the upper region of the condensation section and the outlet in order to be effective in removing the non-condensable gases.

According to a further embodiment of the first aspect, the passage is substantially straight. A straight passage will in itself form less flow resistance and thus is preferable since it will allow the non-condensable gases to reach the outlet easier.

According to a further embodiment of the first aspect, in the passage, the distance between opposing valleys of opposing heat exchanging plates is approximately twice the distance between opposing ridges of opposing heat exchanging plates. The indentations forming the passage preferably form a half plane in the plate, i.e. the press depths of the plate at the passage is between a ridge and a valley. In this way, about the same space between opposing plates in both plate interspaces at the location of the passage, i.e. in the cooling section located opposite the condensation section.

According to a further embodiment of the first aspect, an evaporation section of another process stage is located opposite the condensation section. In this way a multistage plate package for desalination may be realized. The energy recovered by the condensation is transferred to the feed of the evaporation section of the other process stage and is used for evaporating this feed.

According to a further embodiment of the first aspect, the heat exchanging plates are compression moulded. In this way the surface structure of the plates may be made corrugated to increase the surface areas and thereby the heat transfer.

According to a further embodiment of the first aspect, the upper border and the lower border are formed by a gasket, preferably the condensation section is circumferentially enclosed by a gasket except at the location of the inlet and outlet. By using a gasket, e.g. a rubber gasket, the plate packages may be properly sealed while still allowing the individual heat exchanging plates of the plate package to be easily separated, i.e. allowing the removal of one of more heat exchanging plates for cleaning and/or maintenance. Further, the use of a gasket eliminates the need for a tank for accommodating the plates.

According to a further embodiment of the first aspect, the inlet and outlet are disposed at opposite ends of the condensation section. In this way, the plate area in the condensation section allowed for condensation of the vaporized feed is maximized.

According to a further embodiment of the first aspect, the outlet is centrally located in the plate package.

In this way the inlets may be located at opposite ends of the plate in order to allow the port holes to be symmetric about the central outlet.

According to a further embodiment of the first aspect, the width of the passage is larger than the distance between adjacent ridges.

The passage should be elongated, i.e. the width should be limited to the distance between two adjacent ridges on the plate.

According to a further embodiment of the first aspect, between opposing heat exchanging plates within the passage ridges mainly will be located opposite valleys.

This means that no contact points will be lost by providing the passage.

According to a second aspect, the present invention relates to a plate according to claim 14.

The plate according to the second aspect is preferably used together with the plate heat exchanger of the first aspect.

### Brief description of the drawings

Fig. 1 shows a front view of a multi stage heat exchanger plate for desalination.
Fig. 2 shows a close-up front view of the plate.
Fig. 3 shows a close-up perspective view of the plate at the passage.
Fig. 4 shows a close-up cross-section view of the plate at the passage.
Fig. 5 shows a close-up cross-section view of two opposite plates at the passage.

### Detailed description of the drawings

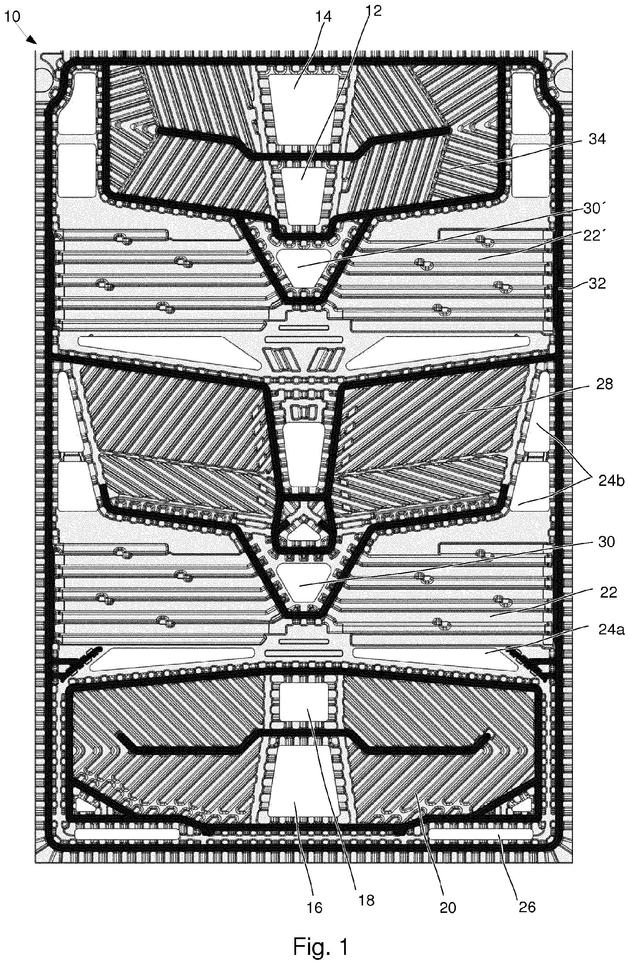

Fig. 1 shows one side of a plate 10 of a multi stage heat exchanger for desalination. The port 12 is the inlet for the cooling medium and the port 14 is the outlet for the cooling medium. Further, the port 16 is the inlet for the heating medium and the port 18 is the outlet for the heating medium. Evaporation is taking place in an evaporation section in the opposite plate interspace opposite the heating section 20 (hence the evaporation section is not visible here). The evaporated steam flows to the separation section 22 located above the evaporation section in the second plate interspace (and above the heating section in the fist interspace) and through the plate 10 via apertures 24a/b to the first plate interspace. The apertures 24a thereby ensures that the evaporated feed reaches both sides of the plate 10, whereas the apertures 24b are there to lead the vapor in to the interspace where the condensation takes place in the condensation section 28. Non-evaporated feed flows out via the concentrate outlet port 26. The non-evaporated feed constitutes brine in a desalination plant but may alternatively constitute a product concentrate such as juice concentrate.

The condensation section 28 is thermally connected to the evaporation section of a second stage located on the opposite second side of the plate 10. The condensed fresh water leaves the condensation section 28 via the outlet port 30. The gasket 32 is represented by the thick black line and act as a fluid tight barrier between the sections and also seals the plates with respect to each other and the surrounding of the plate package.

Evaporation is also taking place in the evaporation section opposite the condensation section 28. The evaporated steam flows through a separation section 22' of the second stage to a condensation section of the second stage opposite the cooling section 34 where the steam condenses into water. The fresh water leaves this condensation section via the port 30'. The condensation section of the second stage may also be provided with a passage like the first stage.

Although the present embodiments depicts a multi stage heat exchanger, it is evident for a skilled person that the present technique is useful also for single stage heat exchangers. In single stage heat exchangers, the condensation section is not opposite an evaporation section of another stage but opposite a cooling section in which a cooling fluid is handled, similar to the second stage of the present embodiment.

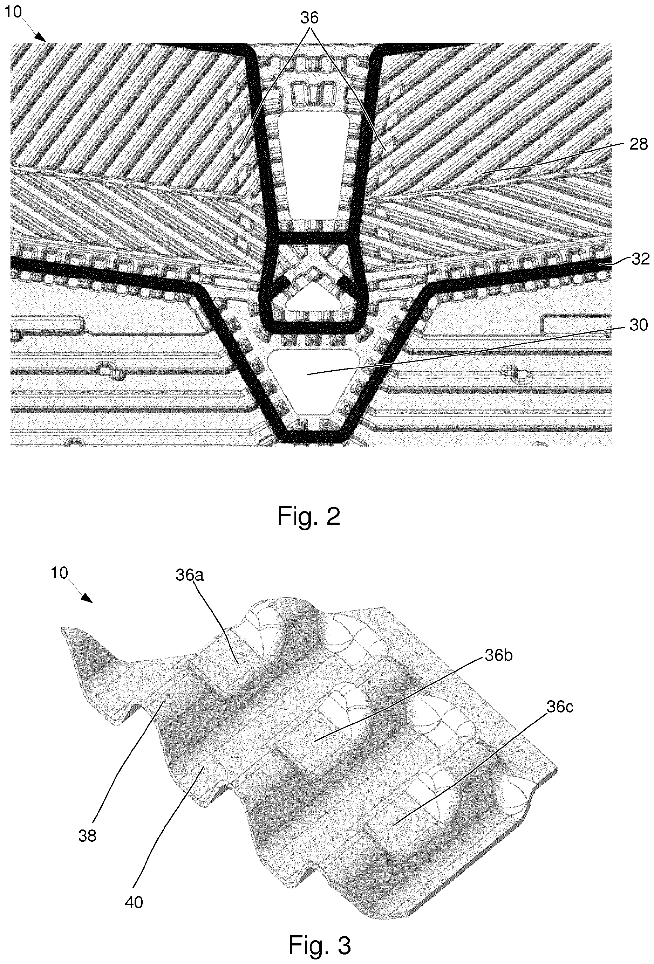

Fig. 2 shows a close-up view of the plate 10 which includes the condensation section 28. The condensation section 28 defines a corrugated pattern of ridges and valleys for optimizing the heat transfer between the opposing plate interspaces of the plate 10. When two plates are mounted in opposing relationship, the ridges and valleys form a cross-shaped pattern where the opposing ridges abut. The fresh water outlet port 30 is located at the bottom of the condensation section 28. The evaporated feed, e.g. stream, is entering the condensation section 28 and is condensed to a liquid since it is cooled off by the fluid on the opposite side of the plate 10. The droplets thus formed will accumulate and flow towards the outlet port 30.

The evaporated feed may in addition to water vapor also include non-condensable gases such as O₂, CO₂, N₂ etc. These gases will also be removed together with the condensed feed via the outlet port 30. However, the cross-shaped pattern of the heat exchanging plates may form a flow resistance, preventing the non-condensable gases from being removed from the upper region of the condensing section 28. Non-condensable gases may thus accumulate in the upper region. Such accumulated non-condensable gases takes up space in the condensation section 28 which cannot be used for feed condensing, and evaporation on the opposite side, and thus makes the plate 10 less effective.

By incorporating a passage formed as indentations 36 in the ridges between the upper part of the condensing section 28 and the outlet port 30, the flow resistance for the non-condensable gases will be reduced and the risk of accumulation of non-condensable gases in the upper region will be reduced. The condensing performance of the plate 10 will thus be increased.

In the present view the heat transfer takes place between the condensation section 28 and the opposing evaporation section, however, it is equally feasible to implement the passage in a configuration where the condensation section is opposing a cooling section, such as in a single stage plate package.

Fig. 3 shows a close-up perspective view of the plate 10 at the passage showing a part of the corrugated condensation section. The corrugations form ridges 38 and valleys 40. The passage is formed by indentations 36a/b/c in adjacent ridges 38, forming a straight passage.

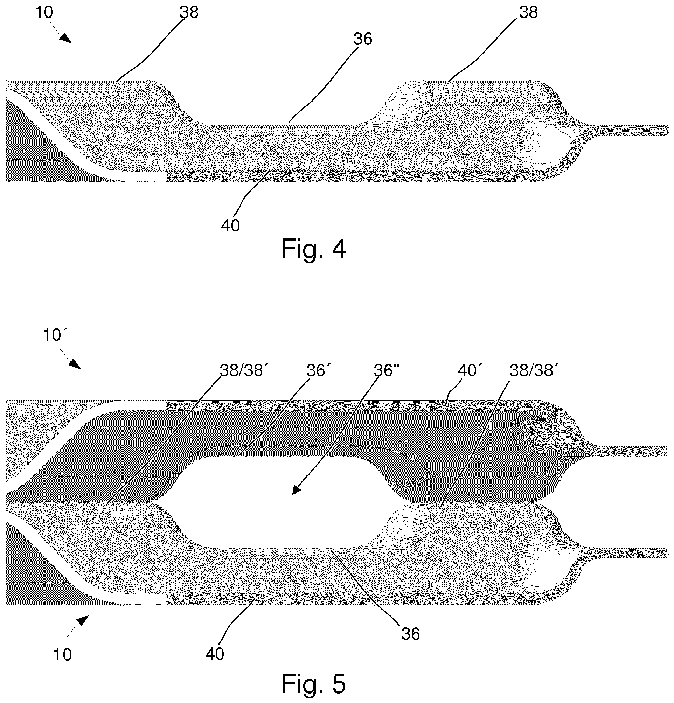

Fig. 4 shows a close-up cross-section view of the plate 10. The depth of the indentations 36 in the ridges 38 is here shown as being half the total press depth between the ridges 38 and the valleys 40, however, depending on the flow resistance between the upper region and the outlet, any other press depth between the depth between the ridges 38 and the valleys 40 may be chosen. Also, the width of the indentation 36 may be varied. A wide passage will decrease flow resistance, however, the passage is preferably kept as small as possible for allowing a better heat transfer between the plates.

Fig. 5 shows a close-up cross-section view of two opposed plates 10/10'. The ridges 38/38' abut in a cross-corrugated pattern, while the valleys 40/40' form a spacing in-between themselves. The indentations 36/36' allow a passage 36" to be formed between the plates 10/10' where normally the ridges 38/38' would extend to an abutting plane. Preferably, the ridges of both plates are provided with indentations, however, it is feasible to provide only one of the plates with indentations. The passage formed by the indentations preferably form a straight line.

It is evident to a skilled person that numerous modifications to the above embodiments are possible.

## Claims

1. A plate heat exchanger for treatment of a feed, the plate heat exchanger including a plate package comprising a plurality of heat exchanging plates arranged in a successive order forming alternating first and second plate interspaces, each first plate interspace define a condensation section for condensing vaporized feed, each condensation section defining an upper border, a lower border, an inlet for introducing vaporized feed into the condensation section between the upper border and the lower border, and an outlet for removing condensed feed from the condensation section at the lower border, each heat exchanging plate being provided with corrugations in the condensing section forming ridges and valleys extending in opposite directions, the ridges of opposing heat exchanging plates form a cross shaped pattern in the first plate interspaces,
wherein the plate interspaces further comprising an evaporation section that can be, in use, heated by a heating volume arranged to permit evaporation of at least a part of the feed, and a separation section being arranged to separate non-vaporized feed from vaporized feed, the separation section communicating with the condensation section for supplying vaporized feed to the inlet, the plate heat exchanger being **characterized in that** the condensation section defines a passage extending at least a part of the distance between the upper border and the outlet, the ridges of each heat exchanging plate outside the passage extend to a contact plane allowing opposing heat exchanging plates to abut at contact points in the contact plane, whereas the ridges of each heat exchanging plate within the passage are spaced apart from the contact plane preventing contact between heat exchanging plates in the passage.

2. The plate heat exchanger according to claim 1, wherein the plate package defines cooling section located in the second plate interspaces between the condensation sections, the cooling sections being adapted for handling a cooling fluid.

3. The plate heat exchanger according to any of the preceding claims, wherein the passage extends from a location adjacent the upper border, preferably opposite the inlet.

4. The plate heat exchanger according to any of the preceding claims, wherein the passage extends at least 50% of the distance between the upper border and the outlet, the passage preferably extending 75% to 100% of the distance between the upper border and the outlet.

5. The plate heat exchanger according to any of the preceding claims, wherein the passage is substantially straight.

6. The plate heat exchanger according to any of the preceding claims, wherein, in the passage, the distance between opposing valleys of opposing heat exchanging plates is approximately twice the distance between opposing ridges of opposing heat exchanging plates.

7. The plate heat exchanger according to any of the preceding claims, wherein an evaporation section of another process stage is located opposite the condensation section.

8. The plate heat exchanger according to any of the preceding claims, wherein the heat exchanging plates are compression moulded.

9. The plate heat exchanger according to any of the preceding claims, wherein the upper border and the lower border are formed by a gasket, preferably the condensation section is circumferentially enclosed by a gasket except at the location of the inlet and outlet.

10. The plate heat exchanger according to any of the preceding claims, wherein the inlet and outlet are disposed at opposite ends of the condensation section.

11. The plate heat exchanger according to any of the preceding claims, wherein the outlet is centrally located in the plate package.

12. The plate heat exchanger according to any of the preceding claims, wherein the width of the passage is larger than the distance between adjacent ridges.

13. The plate heat exchanger according to claim 12, wherein between opposing heat exchanging plates within the passage ridges mainly will be located opposite valleys.

14. A plate for a plate heat exchanger for treatment of a feed, the plate defines a condensation section for condensing vaporized feed, the condensation section defines an upper border, a lower border, an inlet for introducing vaporized feed into the condensation section between the upper border and the lower border, and an outlet for removing condensed feed from the condensation section, the heat exchanging plate being provided with corrugations in the condensing section forming ridges and valleys extending in opposite directions,
wherein the plate further comprising an evaporation section that can be, in use, heated by a heating volume arranged to permit evaporation of at least a part of the feed, and a separation section being arranged to separate non-vaporized feed from vaporized feed, the separation section communicating with the condensation section for supplying vaporized feed to the inlet, the plate being **characterized in that** the condensation section defines a passage extending at least a part of the distance between the upper border and the outlet, the ridges outside the passage extend to a contact plane, whereas the ridges within the passage are spaced apart from the contact plane.

## Patentansprüche

1. Plattenwärmetauscher zum Behandeln eines Zuflusses, wobei der Plattenwärmetauscher einen Plattenstapel umfasst, welcher eine Mehrzahl von Wärmetauscherplatten umfasst, welche in einer aufeinanderfolgenden Reihenfolge angeordnet sind, welche abwechselnde erste und zweite Plattenzwischenräume bilden, wobei jeder erste Plattenzwischenraum einen Kondensationsabschnitt zum Kondensieren eines verdampften Zuflusses umfasst, wobei jeder Kondensationsabschnitt einen oberen Rand, einen unteren Rand, einen Eingang zum Einführen des verdampften Zuflusses in den Kondensationsabschnitt zwischen dem oberen Rand und dem unteren Rand, und einen Ausgang zum Entfernen des kondensierten Zuflusses von dem Kondensationsabschnitt an dem unteren Rand definiert, wobei jede Wärmetauscherplatte mit Wellungen in dem Kondensationsabschnitt versehen ist, welche Kämme und Täler bilden, die sich in entgegengesetzten Richtungen erstrecken, wobei die Kämme von gegenüberliegenden Wärmetauscherplatten ein kreuzförmiges Muster in den ersten Plattenzwischenräumen bilden,
wobei die Plattenzwischenräume ferner einen Verdampfungsabschnitt umfassen, welcher, im Betrieb, durch ein Erwärmungsvolumen erwärmt werden kann, welches angeordnet ist, um eine Verdampfung von mindestens einem Teil des Zuflusses zu ermöglichen, und einen Trennabschnitt, welcher angeordnet ist, um nicht verdampften Zufluss vom verdampften Zufluss zu trennen, wobei der Trennabschnitt mit dem Kondensationsabschnitt kommuniziert, um den verdampften Zufluss zu dem Eingang zuzuführen, wobei der Plattenwärmetauscher **dadurch gekennzeichnet ist, dass** der Kondensationsabschnitt einen Durchgang definiert, welcher sich mindestens teilweise über den Abstand zwischen dem oberen Rand und dem Ausgang erstreckt, wobei die Kämme jeder Wärmetauscherplatte außerhalb des Durchgangs sich zu einer Kontaktebene erstrecken, welche gegenüberliegenden Wärmetauscherplatten ermöglicht, in der Kontaktebene an Kontaktstellen anzuliegen, während die Kämme jeder Wärmetauscherplatte innerhalb des Durchgangs von der Kontaktebene entfernt sind, um einen Kontakt zwischen den Wärmetauscherplatten in dem Durchgang zu verhindern.

2. Plattenwärmetauscher nach Anspruch 1, wobei der Plattenstapel Kühlabschnitte definiert, welche in den zweiten Plattenzwischenräumen zwischen den Kondensationsabschnitten angeordnet sind, wobei die Kühlabschnitte zum Handhaben eines Kühlfluids ausgebildet sind.

3. Plattenwärmetauscher nach einem der vorhergehenden Ansprüche, wobei der Durchgang sich von einer Stelle in der Nähe des oberen Rands, bevorzugt gegenüber dem Eingang, erstreckt.

4. Plattenwärmetauscher nach einem der vorhergehenden Ansprüche, wobei der Durchgang sich über mindestens 50% des Abstands zwischen dem oberen Rand und dem Ausgang erstreckt, wobei der Durchgang sich bevorzugt über 75% bis 100% des Abstands zwischen dem oberen Rand und dem Ausgang erstreckt.

5. Plattenwärmetauscher nach einem der vorhergehenden Ansprüche, wobei der Durchgang im Wesentlichen gerade ist.

6. Plattenwärmetauscher nach einem der vorhergehenden Ansprüche, wobei, in dem Durchgang, der Abstand zwischen gegenüberliegenden Täler von gegenüberliegenden Wärmetauscherplatten etwa dem doppelten Abstand zwischen gegenüberliegenden Kämmen von gegenüberliegenden Wärmetauscherplatten entspricht.

7. Plattenwärmetauscher nach einem der vorhergehenden Ansprüche, wobei ein Verdampfungsabschnitt einer anderen Prozessstufe gegenüber dem Kondensationsabschnitt angeordnet ist.

8. Plattenwärmetauscher nach einem der vorhergehenden Ansprüche, wobei die Wärmetauscherplatten formgepresst sind.

9. Plattenwärmetauscher nach einem der vorhergehenden Ansprüche, wobei der obere Rand und der untere Rand durch eine Dichtung gebildet sind, bevorzugt wobei der Kondensationsabschnitt durch eine Dichtung umfangsmäßig umschlossen ist, außer an der Stelle des Eingangs und des Ausgangs.

10. Plattenwärmetauscher nach einem der vorhergehenden Ansprüche, wobei der Eingang und der Ausgang an gegenüberliegenden Enden des Kondensationsabschnitts angeordnet sind.

11. Plattenwärmetauscher nach einem der vorhergehenden Ansprüche, wobei der Ausgang zentral in dem Plattenstapel angeordnet ist.

12. Plattenwärmetauscher nach einem der vorhergehenden Ansprüche, wobei die Breite des Durchgangs größer als der Abstand zwischen anliegenden Kämmen ist.

13. Plattenwärmetauscher nach Anspruch 12, wobei zwischen gegenüberliegenden Wärmetauscherplatten innerhalb des Durchgangs, die Kämme hauptsächlich gegenüber Tälern angeordnet sind.

14. Platte für einen Plattenwärmetauscher zum Behandeln eines Zuflusses, wobei die Platte einen Kondensationsabschnitt zum Kondensieren eines verdampften Zuflusses definiert, wobei der Kondensationsabschnitt einen oberen Rand, einen unteren Rand, einen Eingang zum Einführen des verdampften Zuflusses in den Kondensationsabschnitt zwischen dem oberen Rand und dem unteren Rand, und einen Ausgang definiert, um den kondensierten Zufluss von dem Kondensationsabschnitt zu entfernen, wobei die Wärmetauscherplatte mit Wellungen in dem Kondensationsabschnitt versehen ist, welche Kämme und Täler bilden, die sich in entgegengesetzten Richtungen erstrecken,
wobei die Platte ferner einen Verdampfungsabschnitt, welcher, in Betrieb, durch ein Erwärmungsvolumen erwärmt werden kann, welches angeordnet ist, um die Verdampfung von mindestens einem Teil des Zuflusses zu ermöglichen, und einen Trennabschnitt umfasst, welcher angeordnet ist, um den nicht verdampften Zufluss von dem verdampften Zufluss zu trennen, wobei der Trennabschnitt mit dem Kondensationsabschnitt kommuniziert, um den verdampften Zufluss an den Eingang zuzuführen, wobei die Platte **dadurch gekennzeichnet ist, dass** der Kondensationsabschnitt einen Durchgang definiert, welcher sich mindestens teilweise über den Abstand zwischen dem oberen Rand und dem Ausgang erstreckt, wobei die Kämme außerhalb des Durchgangs sich zu einer Kontaktebene erstrecken, während die Kämme innerhalb des Durchgangs von der Kontaktebene entfernt sind.

## Revendications

1. Échangeur de chaleur à plaques pour le traitement d'un flux, l'échangeur de chaleur à plaques incluant un ensemble de plaques comprenant une pluralité de plaques d'échange de chaleur agencées dans un ordre successif formant une alternance de premiers et seconds espaces de plaques, chaque premier espace de plaque définissant une section de condensation permettant de condenser le flux vaporisé, chaque section de condensation définissant une limite supérieure, une limite inférieure, une entrée permettant d'introduire le flux vaporisé dans la section de condensation entre la limite supérieure et la limite inférieure, et une sortie permettant d'éliminer le flux condensé de la section de condensation à la limite inférieure, chaque plaque d'échange de chaleur étant dotée d'ondulations dans la section de condensation formant des crêtes et des creux s'étendant dans des directions opposées, les crêtes des plaques d'échange de chaleur opposées formant un motif en croix dans les premiers espaces de plaque,
dans lequel les espaces de plaque comprennent en outre une section d'évaporation qui, en cours d'utilisation, peut être chauffée par un volume de chauffage agencé pour permettre l'évaporation d'au moins une partie du flux, et une section de séparation agencée pour séparer un flux non-vaporisé d'un flux vaporisé, la section de séparation communiquant avec la section de condensation afin de fournir un flux vaporisé à l'entrée, l'échangeur de chaleur à plaques étant **caractérisé en ce que** la section de condensation définit un passage s'étendant au moins partiellement sur la distance entre la limite supérieure et la sortie, les crêtes de chaque plaque d'échange de chaleur hors du passage s'étendent vers un plan de contact permettant aux plaques d'échange de chaleur opposées de venir en butée au niveau de points de contact dans le plan de contact, tandis que les crêtes de chaque plaque d'échange de chaleur dans le passage sont espacées du plan de contact, empêchant le contact entre les plaques d'échange de chaleur dans le passage.

2. Échangeur de chaleur à plaques selon la revendication 1, dans lequel l'ensemble de plaques définit des sections de refroidissement situées dans les seconds espaces de plaque entre les sections de condensation, les sections de refroidissement étant aptes à manipuler un fluide de refroidissement.

3. Échangeur de chaleur à plaques selon l'une quelconque des revendications précédentes, dans lequel le passage s'étend à partir d'un emplacement adjacent à la limite supérieure, de préférence opposé à l'entrée.

4. Échangeur de chaleur à plaques selon l'une quelconque des revendications précédentes, dans lequel le passage s'étend sur au moins 50 % de la distance entre la limite supérieure et la sortie, le passage s'étendant de préférence sur 75 % à 100 % de la distance entre la limite supérieure et la sortie.

5. Échangeur de chaleur à plaques selon l'une quelconque des revendications précédentes, dans lequel le passage est sensiblement droit.

6. Échangeur de chaleur à plaques selon l'une quelconque des revendications précédentes, dans lequel, dans le passage, la distance entre des creux opposés de plaques d'échange de chaleur représente approximativement deux fois la distance entre des crêtes opposées de plaques d'échange de chaleur opposées.

7. Échangeur de chaleur à plaques selon l'une quelconque des revendications précédentes, dans lequel une section d'évaporation d'une autre phase de traitement est située à l'opposé de la section de condensation.

8. Échangeur de chaleur à plaques selon l'une quelconque des revendications précédentes, dans lequel les plaques à échange de chaleur sont moulées par compression.

9. Échangeur de chaleur à plaques selon l'une quelconque des revendications précédentes, dans lequel la limite supérieure et la limite inférieure sont formées par un joint, de préférence la section de condensation est entourée sur sa circonférence par un joint, excepté à l'emplacement de l'entrée et de la sortie.

10. Échangeur de chaleur à plaques selon l'une quelconque des revendications précédentes, dans lequel l'entrée et la sortie sont disposées à des extrémités opposées de la section de condensation.

11. Échangeur de chaleur à plaques selon l'une quelconque des revendications précédentes, dans lequel la sortie est située au niveau central dans l'ensemble de plaques.

12. Échangeur de chaleur à plaques selon l'une quelconque des revendications précédentes, dans lequel la largeur du passage est supérieure à la distance entre des crêtes adjacentes.

13. Échangeur de chaleur à plaques selon la revendication 12, dans lequel entre des plaques d'échange de chaleur opposées dans le passage, les crêtes seront essentiellement situées à l'opposé des creux.

14. Plaque pour un échangeur de chaleur de plaques pour le traitement d'un flux, la plaque définissant une section de condensation permettant de condenser le flux vaporisé, la section de condensation définissant une limite supérieure, une limite inférieure, une entrée permettant d'introduire le flux vaporisé dans la section de condensation entre la limite supérieure et la limite inférieure et une sortie permettant d'enlever le flux condensé de la section de condensation, la plaque d'échange de chaleur étant dotée d'ondulations dans la section de condensation formant des crêtes et des creux s'étendant dans des directions opposées,
dans laquelle la plaque comprend en outre une section d'évaporation qui, en cours d'utilisation, peut être chauffée par un volume de chauffage agencé de façon à permettre l'évaporation d'au moins une partie du flux, et une section de séparation étant agencée pour séparer un flux non-vaporisé d'un flux vaporisé, la section de séparation communiquant avec la section de condensation afin de fournir un flux vaporisé à l'entrée, la plaque étant **caractérisée en ce que** la section de condensation définit un passage s'étendant au moins sur une partie de la distance entre la limite supérieure et la sortie, les crêtes hors du passage s'étendent vers un plan de contact, tandis que les crêtes dans le passage sont espacées du plan de contact.
